# EUROPEAN PATENT SPECIFICATION

(11) **EP 1 742 163 B1**
(45) Date of publication and mention of the grant of the patent: **02.05.2012**
(21) Application number: 06115785.5
(22) Date of filing: 21.06.2006
(51) Int. Cl.: G06F 21/00, G06F 21/24

(54) **Image forming method and image forming system**
Bildformungsverfahren und Bildformungssystem
Procédé de formation d'images et système de formation d'images

(30) Priority: 30.06.2005 JP 2005193080
(43) Date of publication of application: 10.01.2007
(73) Proprietor: CANON KABUSHIKI KAISHA, Ohta-ku Tokyo 146-8501 (JP)
(72) Inventor: OSADA, Mamoru, Tokyo Tokyo 146-8501 (JP); KUBOTA, Tsutomu, Tokyo Tokyo 146-8501 (JP)
(74) Representative: TBK

(56) References cited:
- EP-A- 1 465 051
- WO-A-02/088978
- US-A1- 2004 117 784

## Description

The present invention relates to an image forming method, image forming system, image forming apparatus, driver program, information processing apparatus, and license management server.

Image forming methods and apparatuses to form an image by using a software application that requires a license are known conventionally. There exist, e.g., printers and copying machines which install and execute a software application, as needed, by using Java® or the like.

For example, a technique is known which manages, on a predetermined server on the basis of a license, a software application to execute specific processing and causes an office equipment in an arbitrary location to download and execute the application any time (Japanese Patent Laid Open No. 2000 330784).

Document US 2004/117784 (A1) discloses that an image forming apparatus with the configuration including management means for managing the remainder of a right of usage according to license information about an application loaded to a peripheral device or a function of the peripheral device, and distribution means for distributing a right of usage of an application and a function to each peripheral device.

On the other hand, there is a need for storing, in a storage medium, a print job generated by using a given device and causing another device to output it equally as in the device used for generation.

The conventional image forming methods and apparatuses however require a license to use a software application. For this reason, even when a job that is executable by a specific application is input to another device incapable of using the application, the job cannot be executed.

That is, license management is done for a software application. A print job created by using a predetermined application can be executed only by a device that can use the same application. To execute the created job in another device, the same printing environment including the application must be prepared.

The present invention has been made to solve the problem of the above-described prior art, and has as its object to allow a device to execute a job in the same environment as that for another device used for creation of the job.

The above mentioned object is achieved by an image forming system according to claim 1 and an image forming method according to claim 9. Further advantageous features are defined in claims 2 to 8.

Other features and advantages of the present invention will be apparent from the following description taken in conjunction with the accompanying drawings, in which like reference characters designate the same or similar parts throughout the figures thereof.
Fig. 1 is a view showing the system configuration of an image forming apparatus according to the first embodiment of the present invention;
Fig. 2 is a system block diagram of the image forming apparatus according to the first embodiment of the present invention;
Fig. 3 is a software block diagram of the image forming apparatus according to the first embodiment of the present invention;
Fig. 4 is a flowchart executed when a print job is received in the image forming apparatus according to the first embodiment of the present invention;
Fig. 5 is a flowchart of device configuration information generation of the image forming apparatus according to the first embodiment of the present invention;
Fig. 6 is a view showing the license information of a specific application in the image forming apparatus according to the first embodiment of the present invention;
Fig. 7 is a view showing device configuration information generated by the image forming apparatus according to the first embodiment of the present invention;
Fig. 8 is a view showing a temporary license generated by the image forming apparatus according to the first embodiment of the present invention;
Fig. 9 is a software block diagram of the image forming apparatus according to the first embodiment of the present invention;
Fig. 10 is a flowchart executed when a memory card is inserted in the image forming apparatus according to the first embodiment of the present invention;
Fig. 11 is a view showing part of the database of a license server according to the first embodiment of the present invention;
Fig. 12 is a flowchart of the license server according to the first embodiment of the present invention;
Fig. 13 is a view of a license issued by the license server according to the first embodiment of the present invention;
Fig. 14 is a view showing the license transfer processing window of a driver according to the first embodiment of the present invention;
Fig. 15 is a flowchart executed when a print job is received in an image forming apparatus according to the first comparative example of the present invention;
Fig. 16 is a view showing the configuration of a system according to the second comparative example of the present invention;
Fig. 17 is a view showing the configurations of MFPs 110 and 120 and a PC 101 according to the second comparative example of the present invention;
Fig. 18 is a flowchart showing the operation of the PC 101 according to the second comparative example of the present invention;
Fig. 19 is a flowchart showing the print data creation operation of the MFP 110 according to the second comparative example of the present invention;
Fig. 20 is a flowchart showing the print operation of the MFP 120 according to the second comparative example of the present invention;
Fig. 21 is a flowchart showing the operation of a PC 101 according to the third comparative example of the present invention;
Fig. 22A is a flowchart of the print operation of an MFP 120 according to the third comparative example of the present invention;
Fig. 22B is a flowchart of the print operation of the MFP 120 according to the third comparative example of the present invention; and
Fig. 23 is a view showing the configuration of a system according to the fourth comparative example of the present invention.

### DETAILED DESCRIPTION OF THE PREFERRED EMBODIMENTS

Preferred embodiment and comparative examples of the present invention will now be described in detail with reference to the accompanying drawings. It should be noted that the relative arrangement of the components, the numerical expressions and numerical values set forth in these embodiment and comparative examples do not limit the scope of the present invention unless it is specifically stated otherwise.

### (First Embodiment)

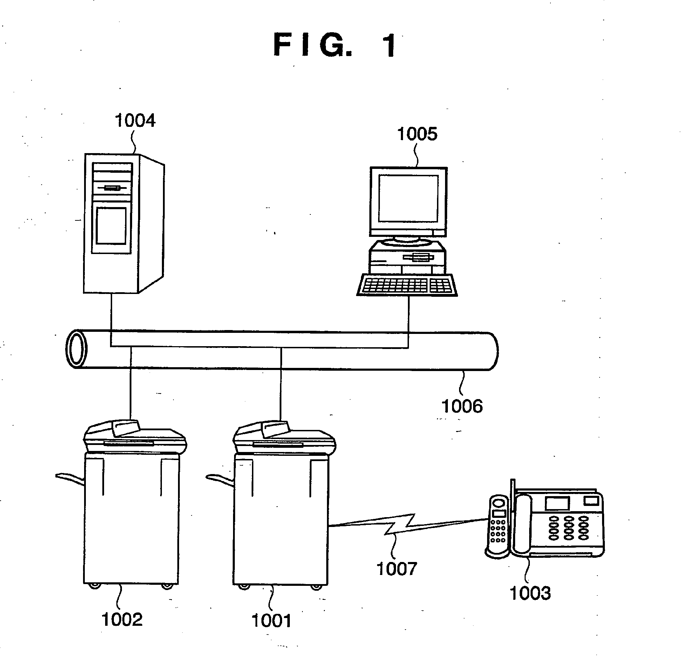

Fig. 1 is a view showing a system configuration including a copying machine as the first embodiment of an image forming apparatus according to the present invention.

Copying machines 1001 and 1002 serving as first and second image forming apparatuses have functions of reading a document and printing an image or transmitting it to various devices. A facsimile apparatus 1003 receives, through a public line 1007, data read by the copying machine 1001 and prints the data. A database/license server 1004 is a computer to manage the licenses of applications that run on the copying machines 1001 and 1002. A client computer 1005 instructs the copying machines 1001 and 1002 to do printing. An Ethernet® 1006 is a network which connects the copying machines 1001 and 1002, database/license server 1004, and client computer 1005 to each other.

The copying machines 1001 and 1002 exist in different offices or remote sites. Both the copying machines 1001 and 1002 can access the database/license server 1004 through the Ethernet® 1006. Any connection medium capable of two-way communications can be used. The protocol used on the connection medium for data transmission/reception between the copying machines 1001 and 1002, the database server 1004, and the client computer 1005 can be either an existing protocol such as HTTP (Hyper Text Transfer Protocol), SOAP (Simple Object Access Protocol), or FTP (File Transfer Protocol) or a unique application protocol. A plurality of client computers may be connected to the Ethernet® 1006.

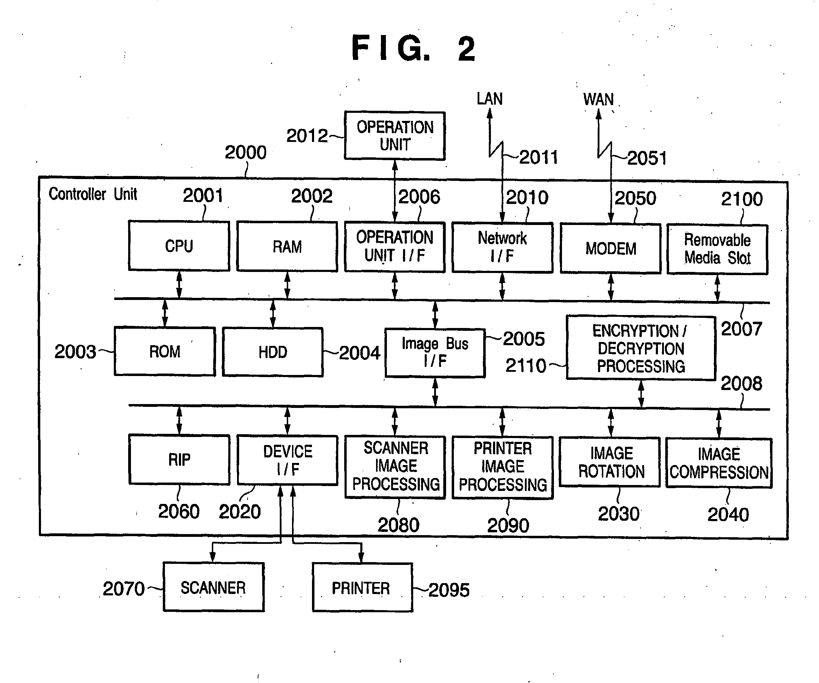

Fig. 2 is a block diagram showing the internal configuration of the copying machines 1001 and 1002. A controller unit 2000 is connected to a scanner 2070 serving as an image input device and a printer 2095 serving as an image output device and also connected to a LAN 2011 and public line (WAN) 2051 so as to input/output image information or device information.

A CPU 2001 is a controller to control the entire system. A RAM 2002 serves as a system work memory to make the CPU 2001 operate, an image memory to temporarily store image data, or a work memory on which various kinds of applications are executed. A ROM 2003 is a boot ROM which stores the boot program of the system. An HDD (Hard Disk Drive) 2004 stores system software, image data, various kinds of applications, and the log of various jobs processed in the copying machine. An operation unit interface 2006 interfaces an operation unit (UI) 2012 having a touch panel and outputs display image data to the operation unit 2012. The operation unit interface 2006 also transmits, to the CPU 2001, information input by the system user through the operation unit 2012.

A network interface 2010 is connected to the LAN 2011 to input/output information. A modem 2050 is connected to the public line 2051 to input/output information. The above-described devices are arranged on a system bus 2007.

An image bus interface 2005 is a bus bridge which connects the system bus 2007 to an image bus 2008 for transferring image data at a high speed and converts the data structure. The image bus 2008 is formed from a PCI bus or IEEE1394. The following devices are arranged on the image bus 2008. A raster image processor (RIP) 2060 rasterizes a PDL code to a bitmap image.

A device interface 2020 connects the scanner 2070 and printer 2095 serving as image input/output devices to the controller unit 2000 and converts image data synchronous/asynchronous system. A scanner image processing unit 2080 corrects, manipulates, and edits input image data. A printer image processing unit 2090 executes, e.g., correction and resolution conversion of the printer for print output image data. An image rotation unit 2030 rotates image data.

An image compression unit 2040 executes compression/decompression processing such as JPEG for multilevel image data and JBIG, MMR, and MH for binary image data. A removable media slot 2100 can connect a detachable data saving medium (storage medium) such as a memory card and store or read image data. In this embodiment, a memory card is used as a storage medium. An encryption/decryption processing unit 2110 is a hardware accelerator board which executes data encryption/decryption processing by using, e.g., a predetermined key.

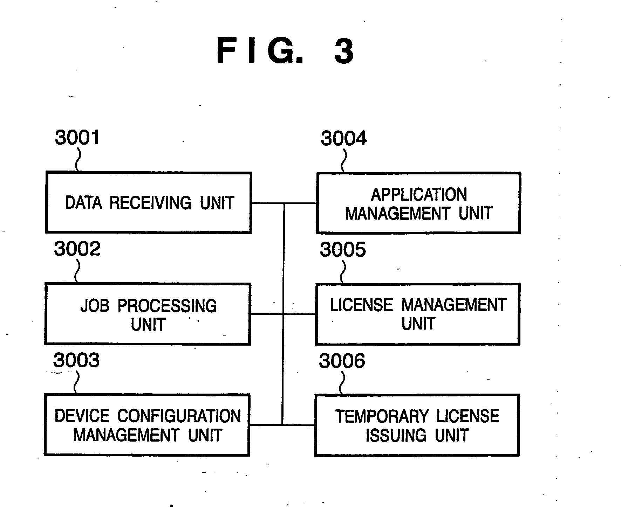

Fig. 3 is a block diagram showing the software configuration in the copying machine 1001. A data receiving unit 3001 receives, e.g., a print job requested by the client computer 1005. A job processing unit 3002 manages and executes various jobs to be executed on the copying machine 1001, including a received print job. A device configuration management unit 3003 manages device configuration information necessary for execution of a job. Depending on the contents of a job, the device configuration management unit 3003 notifies the job processing unit 3002 of device configuration information used in the job.

A software application management unit 3004 manages applications to be used for job execution by the job processing unit 3002. The application management unit 3004 manages applications and their life cycles to install/uninstall a software application and license or activate or stop a software application. A license management unit 3005 manages a valid period and the upper limit of use count which are set for each application. A temporary license issuing unit 3006 generates and issues a temporary license from a predetermined license in the license management unit 3005 in accordance with a request from the device configuration management unit 3003.

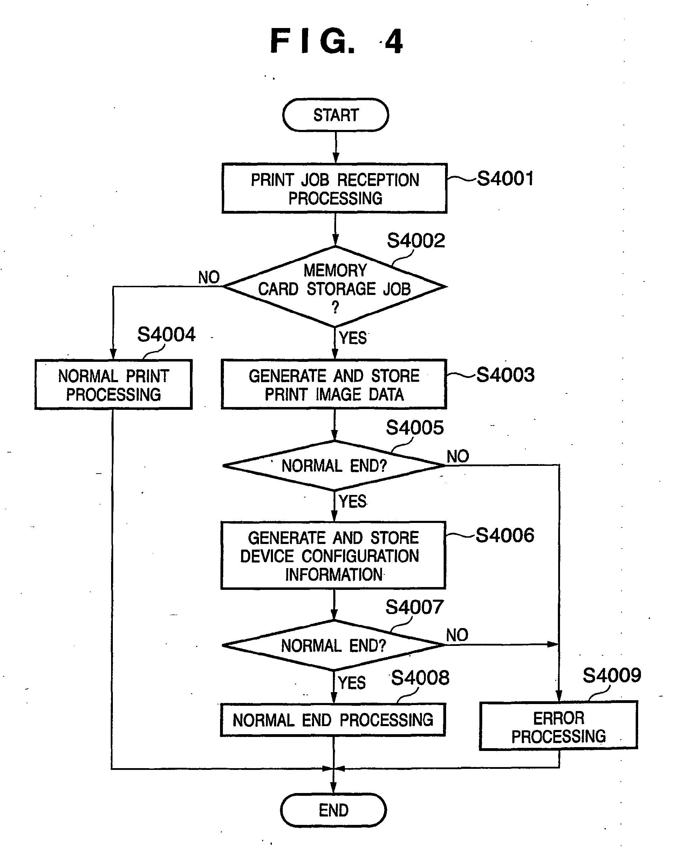

Fig. 4 is a flowchart showing processing executed when the copying machine 1001 or 1002 receives a print job from the client computer 1005. First, in step S4001, the data receiving unit 3001 receives a print job from the client computer 1005.

In step S4002, the copying machine 1001 or 1002 determines whether the received job instructs storage on a memory card inserted in the removable media slot 2100. If YES in step S4002, the flow advances to step S4003. Otherwise, the job processing unit 3002 executes normal print processing in step S4004. In step S4003, the copying machine 1001 or 1002 generates image data and stores it on the memory card in accordance with the contents of the print job. The flow advances to step S4005. The copying machine 1001 or 1002 determines whether image data generation/storage is executed normally. If YES in step S4005, the flow advances to step S4006.
Otherwise, the flow advances to step S4009. In step S4006, the copying machine 1001 or 1002 acquires device configuration information for print job execution from the device configuration management unit 3003 and stores the information.

In step S4007, it is determined whether the processing in step S4006 is normally ended. If YES in step S4007, the flow advances to step S4008 to execute normal end processing. Otherwise, the flow advances to step S4009 to execute error end processing. The error end processing includes, e.g., deleting various kinds of data stored on the memory card.

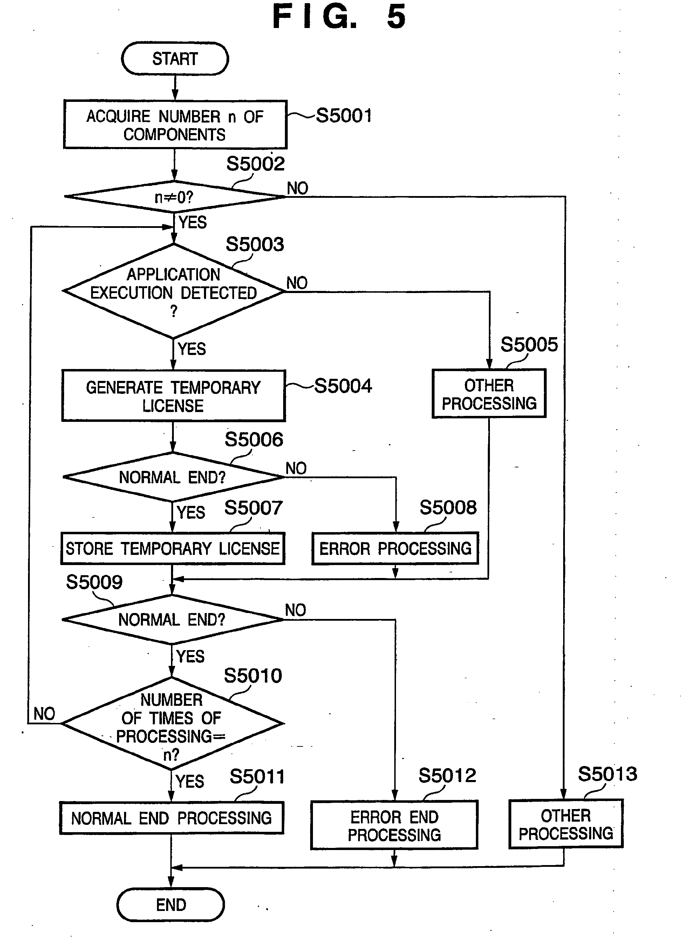

Fig. 5 is a flowchart showing device configuration information generation/storage processing in step S4006 in Fig. 4.

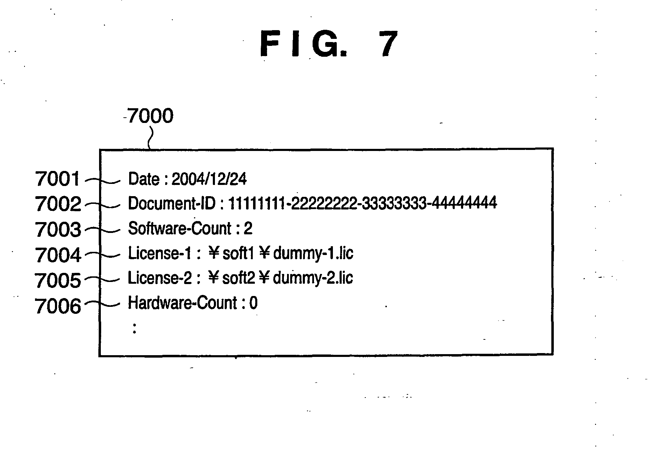

In step S5001, the number of components of a device necessary for image data generation for a job executed in step S4003 is acquired from the device configuration management unit 3003. The number of components of a device necessary for image data generation indicates the number of components of a device necessary for job execution. The device indicates a software application or hardware (Fig. 7). In step S5002, it is determined whether the number of components is not 0. If no component is present, other processing is executed in step S5013, and the flowchart is ended. If a component is present, the flow advances to step S5003 to detect whether a software application is executed at the time of image data generation. If YES in step S5003, the flow advances to step S5004. Otherwise, the flow advances to step S5005 to execute other processing. In step S5004, a temporary license for the application is generated. More specifically, a license corresponding to the application is acquired from the license management unit 3005. Temporary license issue processing is required of the temporary license issuing unit 3006.

In step S5006, it is determined whether temporary license generation is normally ended. If YES in step S5006, the flow advances to step S5007. Otherwise, the flow advances to step S5008. In step S5007, the temporary license is stored on the memory card.
Storage destination information is stored in the device configuration information. With this configuration, when a data saving medium is connected to an arbitrary image forming apparatus, a license to properly use a software application can always be carried.

In step S5008, error processing is executed, in which the temporary license generated in step S5004 is, e.g., deleted. In step S5009, it is determined whether the processing from step S5003 is normally ended. If YES in step S5009, the flow advances to step S5010. Otherwise, the flow advances to step S5012.

In step S5010, it is determined whether the processing is executed n times, i.e., as many times as the number of components acquired in step S5001. If the processing is not completed, the flow returns to step S5003 to repeat the above-described processing.
If the processing is completed, the flow advances to step S5011. In step S5011, normal end processing is executed. In step S5012, error end processing is executed.

In this embodiment, in storing the temporary license in step S5007, the encryption/decryption processing unit 2110 executes encryption by using a predetermined encryption key. In this case, the security of license information of the data saving medium can be increased.

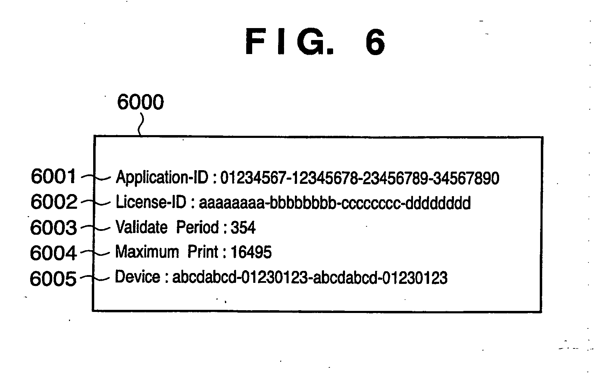

Fig. 6 shows license information 6000 of a specific application, which is managed by the license management unit 3005 according to this embodiment. The license management unit 3005 has the license information 6000 corresponding to each application. Reference numeral 6001 denotes application identification information to uniquely identify a software application. In this embodiment, UUID (Universal Unique ID) is added to each application as information to uniquely identify it. The application identification information 6001 is the same as the UUID.

License identification information 6002 is uniquely assigned to a license. In this embodiment, UUID is used. Valid period information 6003 indicates a period during which the application can be used on the basis of the license. In this embodiment, the license is valid for 354 days. Printing upper limit information 6004 indicates the upper limit of the printed sheet count of the application based on the license. In this embodiment, the remaining sheet count is 16,495. Device identification information 6005 uniquely identifies the copying machine 1001. In this embodiment, UUID is used.

In this embodiment, UUID is used as information to uniquely identify the device. However, the format is not limited to UUID if the information can uniquely identify the device. The license information may be managed in a text format, and any other format such as binary data or XML data can be used as the holding format. When the temporary license is defined by identification information, the application can be prevented from being used for other than its original purpose, and the license can be managed more strictly.

Fig. 7 shows part of device configuration information 7000 generated in step S4006 of this embodiment. Reference numeral 7001 denotes a date of configuration information generation; 7002, image data identification information created in the device configuration information 7000. In this embodiment, UUID is used. Reference numeral 7003 denotes the number of pieces of application information contained in the device configuration information 7000. In this embodiment, two applications are associated. Reference numeral 7004 denotes a temporary license of the first application and a location where the temporary license is stored. Reference numeral 7005 denotes a temporary license of the second application and a location where the temporary license is stored. Reference numeral 7006 denotes the number of pieces of hardware configuration information contained in the device configuration information 7000.

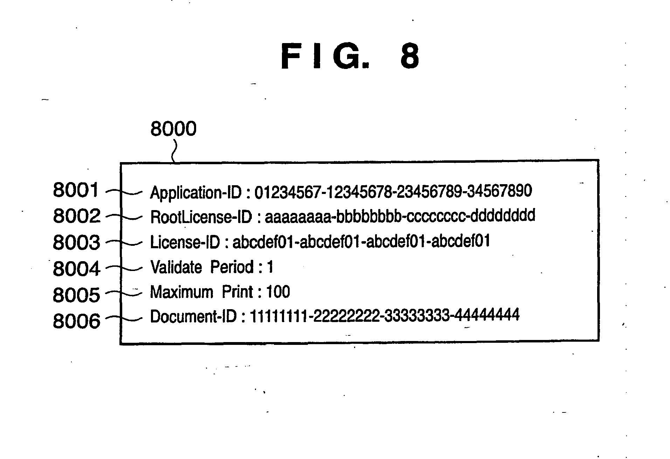

Fig. 8 shows information of a temporary license 8000 generated in step S5004. Reference numeral 8001 denotes identification information of a software application corresponding to the temporary license 8000; 8002, identification information of an original license, i.e., the first license whose contents have been transferred; and 8003, information to uniquely identify the temporary license 8000. Valid period information 8004 indicates a period during which the application can be used on the basis of the license. In this embodiment, the license is valid for one day. Printing upper limit information 8005 indicates the upper limit of the printed sheet count of the application based on the license. In this embodiment, the remaining sheet count is 100. Reference numeral 8006 denotes identification information of image data that can be processed by the license.

In generating a temporary license by the temporary license issuing unit 3006, the temporary license 8000 is generated from the license information 6000. At this time, the valid period information 8004 and printing upper limit information 8005 described in the temporary license 8000 are subtracted from the valid period information 6003 and printing upper limit information 6004 of the license information 6000. Hence, the application can be used in another image forming apparatus within the license given to the application of the image forming apparatus.

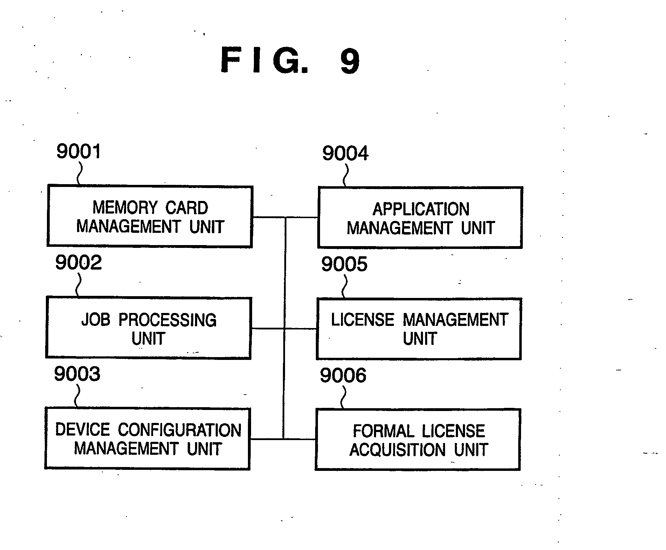

Processing of uploading data stored on a memory card in the copying machine 1001 to the copying machine 1002 will be described next. Fig. 9 is a block diagram showing the software configuration of the copying machine 1002.

A memory card management unit 9001 controls a memory card inserted in the removable media slot 2100. Upon detecting insertion of a memory card, the memory card management unit 9001 searches for the device configuration information 7000 and image data and executes predetermined processing. A job processing unit 9002 manages and executes various jobs to be executed on the copying machine 1001, including printing of image data stored on the memory card. A device configuration management unit 9003 compares information in the device configuration information 7000 detected by the memory card management unit 9001 with current device configuration and detects the difference. A software application management unit 9004 manages applications to be used for job execution by the job processing unit 9002 on the copying machine 1002. The application management unit 9004 manages applications and their life cycles to install/uninstall a software application and license or activate or stop a software application. A license management unit 9005 manages a valid period and the upper limit of use count which are set for each application. A formal license acquisition unit 9006 requests and acquires a formal license from the license server 1004 on the basis of the temporary license contained in the device configuration information 7000 sent from the memory card management unit 9001.

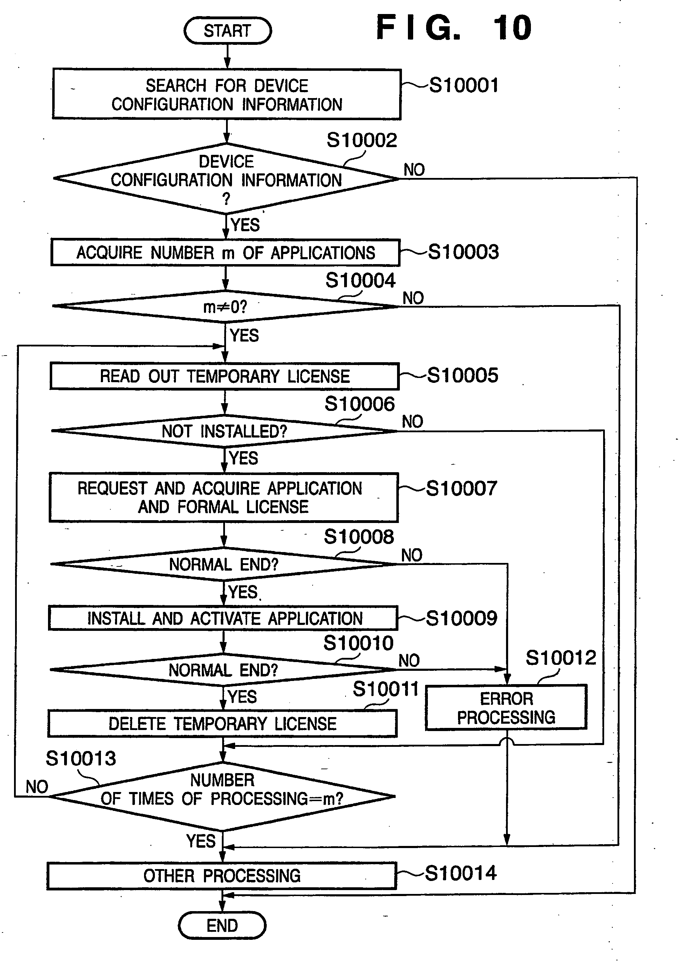

Fig. 10 is a flowchart showing processing of the memory card management unit 9001 which is executed when a memory card is inserted in the copying machine 1002 of this embodiment.

In step S10001, the device configuration information 7000 is searched from the memory card. In this embodiment, the file name and extension of the device configuration information 7000 are not particularly limited if it is searchable information stored in a predetermined format. In step S10002, it is determined whether the device configuration information 7000 is found as the result of search in step S10001. If YES in step S10002, the flow advances to step S10003. Otherwise, the processing of this flow is ended. In step S10003, the application information count 7003 in the device configuration information 7000 is acquired.

In step S10004, it is determined whether the application information count 7003 is not 0. If the application information count 7003 is not 0, the flow advances to step S10005. If the application information count 7003 is 0, the flow advances to step S10014. In step S10005, the temporary license storage information 7005 is analyzed, and the temporary license 8000 is read out from a predetermined position on the memory card. In this step, the encryption/decryption processing unit 2110 executes decryption by using a predetermined decryption key. In this step, additionally, the application identification information 8001 to uniquely identify the application is acquired from the temporary license 8000.

In step S10006, it is determined whether the application identification information acquired in step S10005 is already installed in the application management unit 3004. If the identification information is not installed, the flow advances to step S10007. Otherwise, the flow advances to step S10013.

In step S10007, a formal license is acquired as the second license. More specifically, the temporary license and the identification information of the copying machine 1002 are transmitted to the license server 1004 on the network through the formal license acquisition unit 9006, thereby acquiring the application and formal license. In this embodiment, the identification information of the copying machine 1002 is abcdabcd-45674567-abcdabcd-45674567.

In step S10008, it is determined whether the application and formal license are acquired successfully. If YES in step S10008, the flow advances to step S10009. Otherwise, the flow advances to step S10012. In step s10009, the application is installed and activated. That is, the application is installed and activated by using the application and formal license acquired in step S10007. In the copying machine 1002 of this embodiment, the minimum necessary conditions are the coincidence between the application identification information held by the application to be installed and the application identification information in the license, the presence of license identification information, and the coincidence between the device identification information and the device identification information of the copying machine 1002.

The flow advances to step S10010 to determine whether installation/activation processing is executed successfully. If YES in step S10010, the flow advances to step S10011. Otherwise, the flow advances to step S10012. In step S10011, the temporary license 8000 on the memory card is deleted to prevent execution of the same processing using the memory card.

In step S10012, error processing is executed. More specifically, various kinds of information read out from the memory card are cleared or displayed on the operation unit 2012 of the copying machine 1002. When this step is ended, the flow advances to step S10014.

In step S10013, it is determined whether the processing is executed as many times as the number indicated by the application information count 7003 in the device configuration information 7000. If the processing is not completed, the flow returns to step S10005 to continue the processing. Otherwise, the flow advances to step S10014 to execute other processing, and the processing of this flowchart is ended.

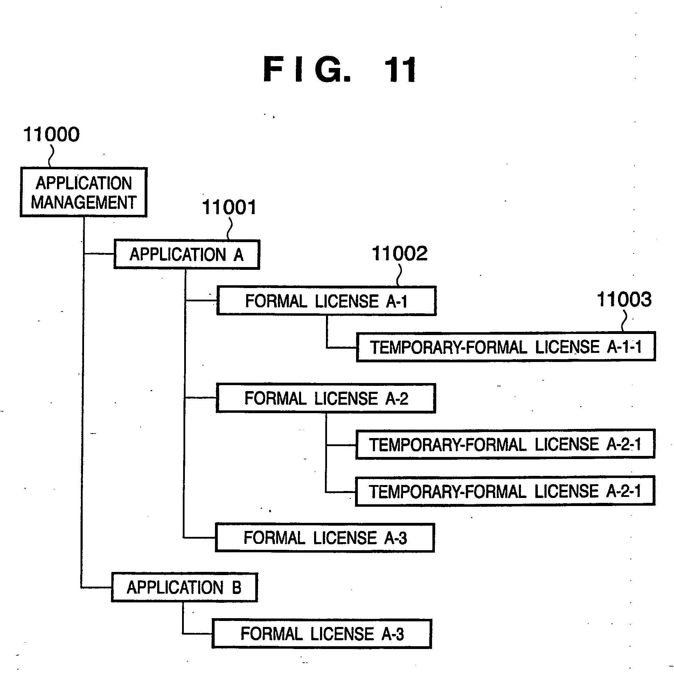

Fig. 11 shows part of the DB which manages applications and licenses in the license server 1004. In this embodiment, only license management will be described, though any other function may be included. The data holding format of the illustrated contents in the DB is not particularly limited.

Information 11000 indicates the root of application management information of this embodiment. Information in this DB is searched from this information as needed. Application information 11001 stores information about a software application such as a software application name and information to uniquely identify the application. Formal license information 11002 stores information about a license which is issued in a normal route by, e.g., purchasing a software application. Temporary-formal license information 11003 is issued by converting a temporary license into a formal license and stores information about a license which is issued as a result of processing requested in step S10008.

In the DB of this embodiment, the plurality of pieces of information described above are managed for each application.

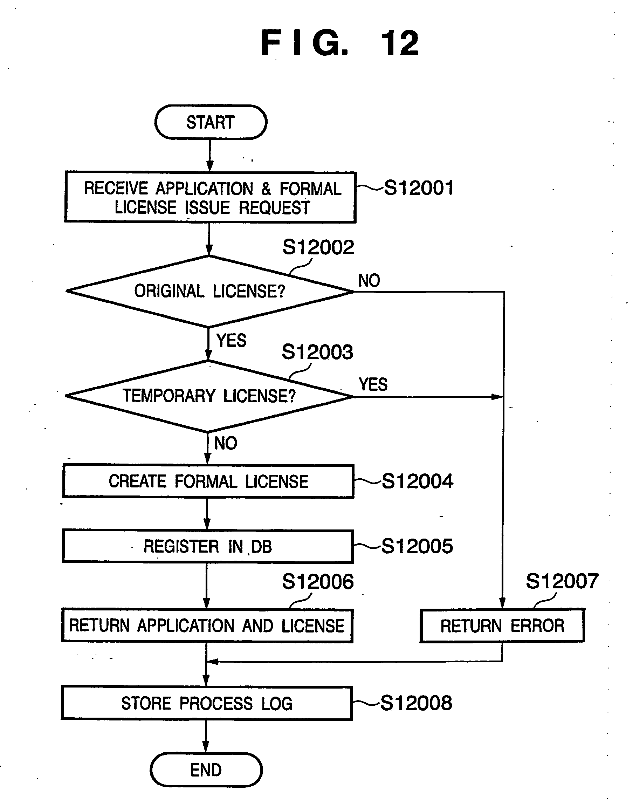

Fig. 12 is a flowchart showing the processing of the license server 1004 when issue of a software application and formal license is requested in step S10007. In step S12001, a software application & formal license issue request command transmitted through the network and accompanying information are received.

In step S12002, the original license information 8002 is acquired from the temporary license 8000 received in step S12001, and search is executed to determine whether the identification information is present in the formal license information 11002. If the identification information is present, the flow advances to step S12003. Otherwise, the flow advances to step S12007. In step S12003, the temporary license information 8003 is acquired from the temporary license 8000 received in step S12001, and search is executed to determine whether the identification information is present in the temporary-formal license information 11003. If the identification information is not present, the flow advances to step S12004. If the identification information is present, the flow advances to step S12007.

In step S12004, a formal license is generated from the temporary license received in step S12001 and the identification information (abcdabcd-45674567-abcdabcd-45674567) of the copying machine 1002. In step S12005, the information of the formal license created in step S12004 is registered in the DB. The information is registered as temporary-formal license information associated with predetermined application information and formal license information.

In step S12006, the application and generated formal license are returned to the request source. They are returned to the formal license acquisition unit 9006 of the copying machine 1002 through the network. In step S12007, an error is returned to notify the user of rejection of formal license issue. Details of the error to be returned are not particularly limited. In step S12008, the log of the above-described steps is stored.

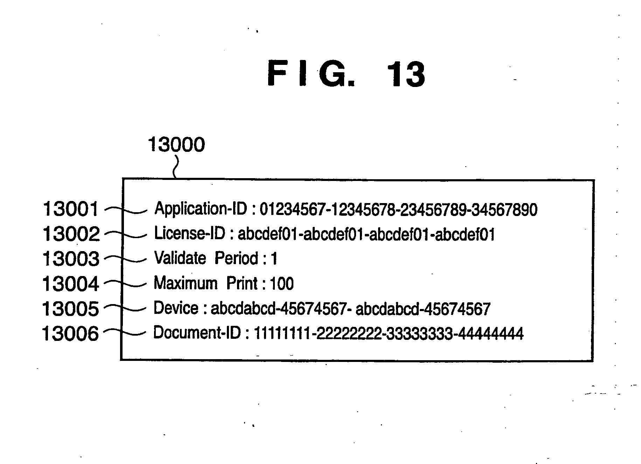

Fig. 13 shows the formal license generated in step S12004. Reference numeral 13001 denotes identification information of a software application corresponding to the application identification information 8001. Information 13002 to uniquely identify the license corresponds to the temporary license 8003. Valid period information 13003 indicates a period during which the application can be used on the basis of the license. In this embodiment, the license is valid for one day. This information corresponds to the temporary license 8004. Printing upper limit information 13004 indicates the upper limit of the printed sheet count of the application based on the license. In this embodiment, the remaining sheet count is 100. This information corresponds to the temporary license 8005. Device identification information 13005 uniquely identifies the copying machine 1002. Information 13006 indicates identification information of image data processible by the license.

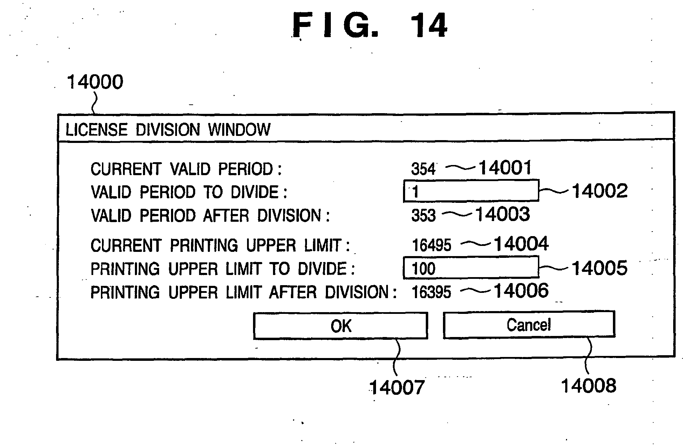

Fig. 14 shows a license division window 14000 to transfer the license contents when the client computer 1005 instructs the copying machine 1001 to store print data on the memory card.

Reference numeral 14001 denotes current valid period contents. That is, the valid period information 6003 is acquired from the license information 6000 of a predetermined application managed by the license management unit 3005 in the copying machine 1001, and displayed. In an input field 14002, the valid period of the license for a software application to be used to print print data stored on the memory card is input. A field 14003 displays a value obtained by subtracting the information of the divided valid period 14002 from the current valid period 14001. Reference numeral 14004 denotes current printing upper limit contents. The printing upper limit information 6004 is acquired from the license information 6000 of a predetermined application managed by the license management unit 3005 in the copying machine 1001, and displayed. In an input field 14005, the printing upper limit of the license for a software application to be used to print print data stored on the memory card is input. A field 14006 displays a value obtained by subtracting the information of the printing upper limit 14005 from the current printing upper limit 14004. A button 14007 is used to determine the settings on the window. Instructing the copying machine 1001 to execute print processing including a temporary license generation instruction corresponding to the contents of the printing upper limit 14005 is determined. A button 14008 is used to cancel the set contents on the window and return to the preceding window.

According to this embodiment, when a print job is to be executed by a device that is different from a device used for creation, execution in the same environment as that for the device used for creation can be implemented, resulting in improved convenience of image forming. Especially, the same environment is implemented by allowing another device to partially use a software application. Since a license is managed, any illicit use can be prevented.

### First comparative example

An image forming apparatus according to the first comparative example of the present invention will be described next. In the first comparative example, a job is stored in a memory inserted in the memory slot of a client computer 1005, unlike the first embodiment in which a job is stored in the removable media slot 2100 of the copying machine 1001.

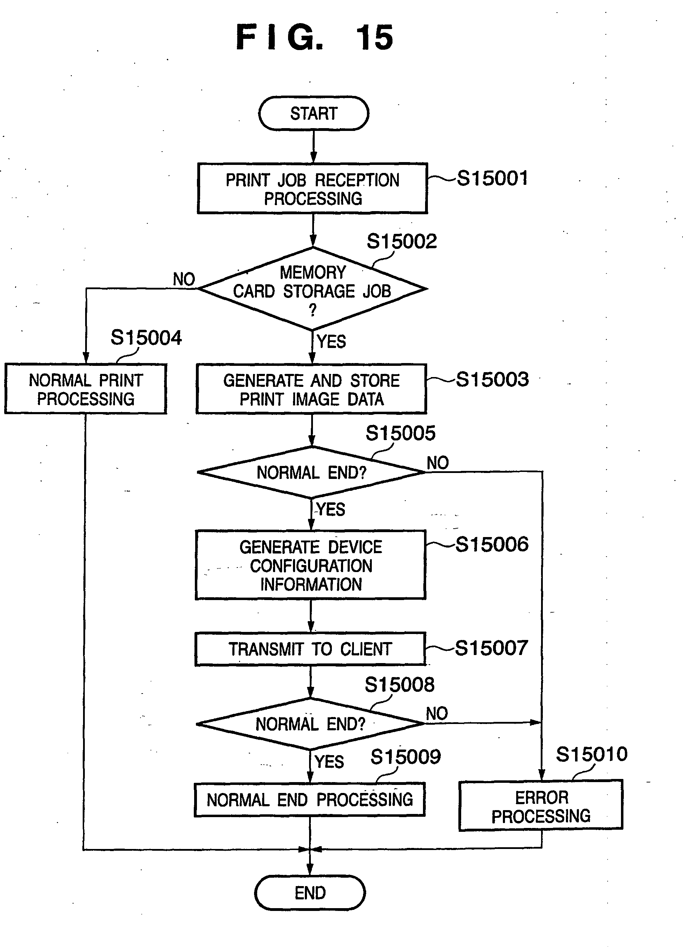

Fig. 15 is a flowchart executed when a copying machine 1001 of this comparative example receives a print job from the client computer 1005. First, in step S15001, a data receiving unit 3001 receives a print job from the client computer 1005.

The flow advances to step S15002 to determine whether the received job instructs storage on a memory card in the client computer 1005. If YES in step S15002, the flow advances to step S15003. Otherwise, a job processing unit 3002 executes normal print processing in step S15004. In step S15003, image data is generated in accordance with the contents of the print job. The flow advances to step S15005 to determine whether image data generation/storage is executed normally. If YES in step S15005, the flow advances to step S15006. Otherwise, the flow advances to step S15009.

In step S15006, device configuration information for print job execution is acquired from a device configuration management unit 3003 and generated. In step S15007, the image data and device configuration information generated in steps S15003 and S15006 are transmitted to the client computer 1005. The flow advances to step S15008 to determine whether the processing in step S15007 is normally ended. If YES in step S15008, the flow advances to step S15009 to execute normal end processing. Otherwise, the flow advances to step S15010 to execute error end processing. The error end processing includes, e.g., deleting various kinds of generated data.

In this comparative example , the data stored on the memory card of the client computer 1005 can be used by the copying machine 1002 and license server 1004 of the first embodiment in the same way.

### Second comparative example

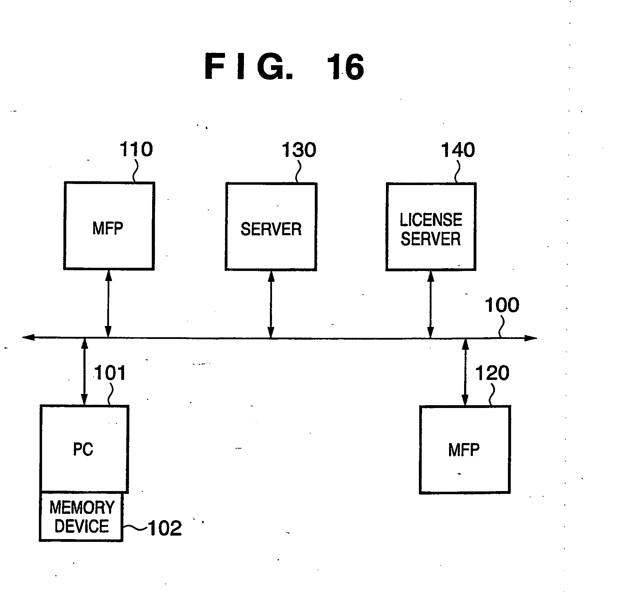

An MFP (Multiple Function Peripheral) as the second comparative example of an image forming apparatus according to the present invention will be described next. Fig. 16 is a view showing a system environment in which the MFP according to this comparative example is used. Referring to Fig. 16, reference numeral 100 denotes a network; 101, a personal computer (PC); 102, a memory device used in connection to the PC; and 110 and 120, MFPs serving as image forming apparatuses. A server 130 manages application software used by the MFPs 110 and 120 and allows download of software as needed. A license server 140 manages the licenses of the application software used by the MFPs 110 and 120.

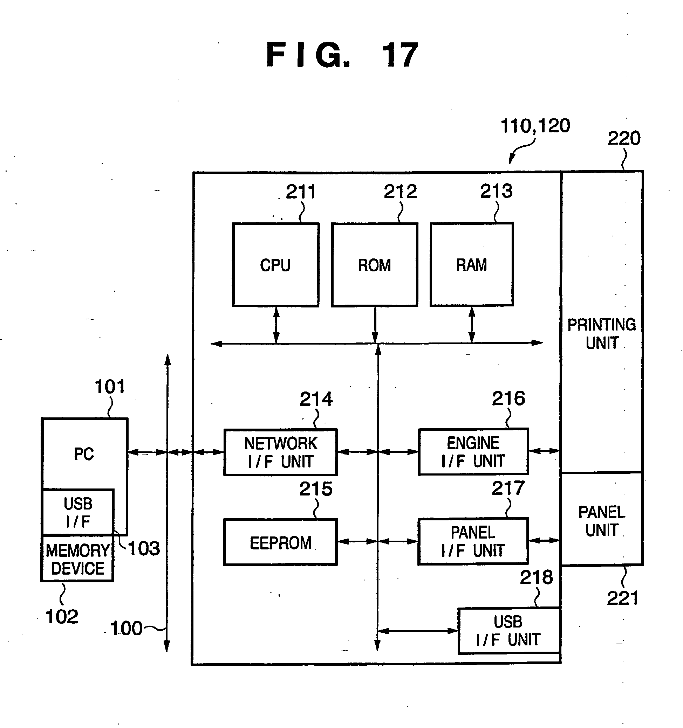

Fig. 17 is a view showing the configuration of the MFPs 110 and 120 and the configuration of the PC 101. Referring to Fig. 17, reference numeral 103 denotes a USB interface serving as a serial interface of the PC 101. A CPU 211 controls the entire MFPs 110 and 120. A ROM 212 stores the operation program of the CPU 211 and font data. A RAM 213 is used by the CPU 211 to operate or used to convert print data sent from the PC 101 into bitmap data and temporarily store it. Reference numeral 214 denotes a network interface unit which communicates with the network 100; and 215, an EEPROM as a nonvolatile memory to store, e.g., the setting information of the MFPs. Reference numeral 216 denotes an engine interface unit which communicates with an engine unit to actually print on paper; 217, a panel interface unit which communicates with the panel unit of the MFP; 218, a USB interface unit which communicates with a connected USB device; 220, a printing unit which actually prints on paper; and 221, a panel unit.

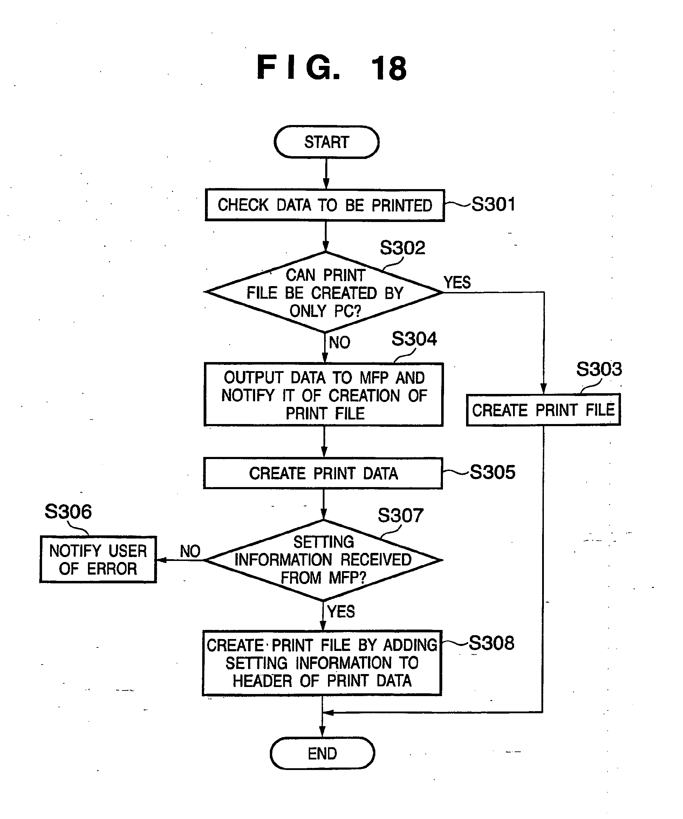

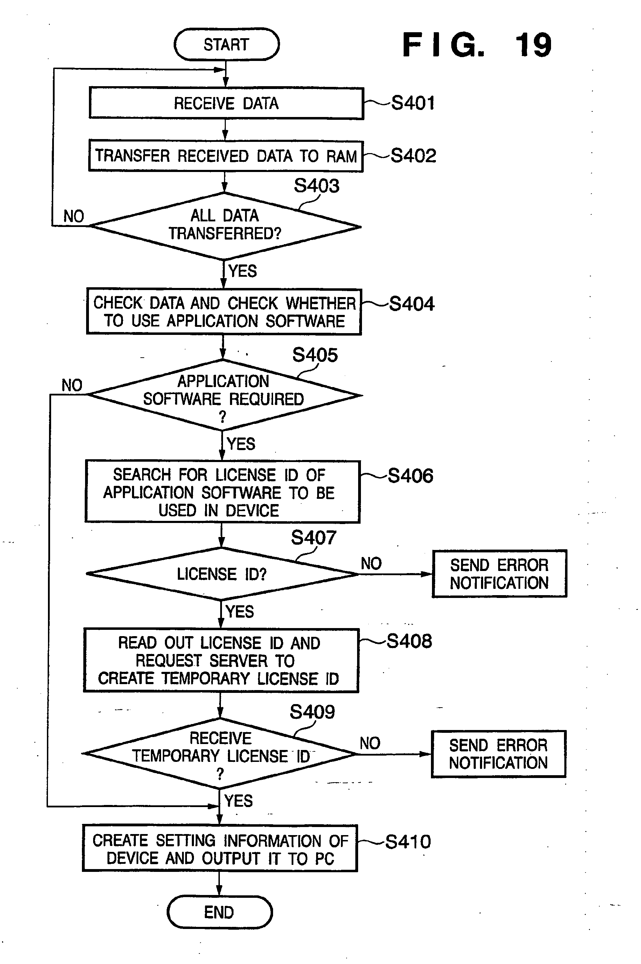

Processing will be described below in which the PC 101 creates print data, the created print data is stored in the memory device 102, and the print data stored in the memory device 102 is printed by the MFP 120. Fig. 18 is a flowchart showing the operation of the PC 101 in this case. Fig. 19 is a flowchart showing the print data creation operation of the MFP 110 in this case.

Data to be printed is designated from the PC 101, and creation of a print file is executed. To process data containing a barcode, the printer driver on the PC 101 checks the data (S301) and determines whether print data of the data can be created by only the PC (S302). If processing is possible in the PC, the PC 101 creates a print file (S303) If processing is impossible in the PC, the data is transmitted to the designated MFP 110, and the MFP 110 is notified that a print file should be created (S304). The PC 101 creates a file from the data transmitted to the MFP 110 (S305).

Referring to Fig. 19, the MFP 110 receives the data through the network interface unit 214 (S401) and notifies the CPU 211 of data reception. The CPU 211 transfers the received data to the RAM 213 through the network interface unit 214 (S402). When all data are transferred to the RAM 213 through the network interface unit 214 (S403), the CPU 211 checks the received data (S404) and checks whether application software processing is necessary (S405). If barcode data is present, the license ID of application software for the barcode data is searched for (S406). If the license ID (barcode print permission) of the application software for the barcode data is present (S407), the CPU 211 reads out the license ID from the EEPROM 215, transmits the license ID to the server 130, and requests creation of temporary license information (temporary license) of the application software (S408). The server 130 sends the license ID to the license server 140 and requests creation of temporary license information. If the license server 140 permits creation, the server 130 creates temporary license ID information and transmits it to the MFP 110 (S410). If the license server 140 does not permit creation, the server 130 notifies the MFP 110 that no temporary license ID information can be created (S409).

Upon receiving the temporary license ID information, the MFP 110 transmits, to the PC 101, device information necessary for printing the transmitted data and, in this case, the temporary license information of the application software of barcode processing as setting information. Setting on the device side, e.g., setting of color processing may be contained in the setting information.

Upon receiving the setting information (S307), the PC 101 creates a file from the data output to the MFP 110 by adding the setting information received from the MFP 110 to the header of the print data (S308). The user copies the created print data to the memory device 102. When notified by the server 130 that no temporary license ID information can be created, the MFP 110 sends an error notification to the user (S306).

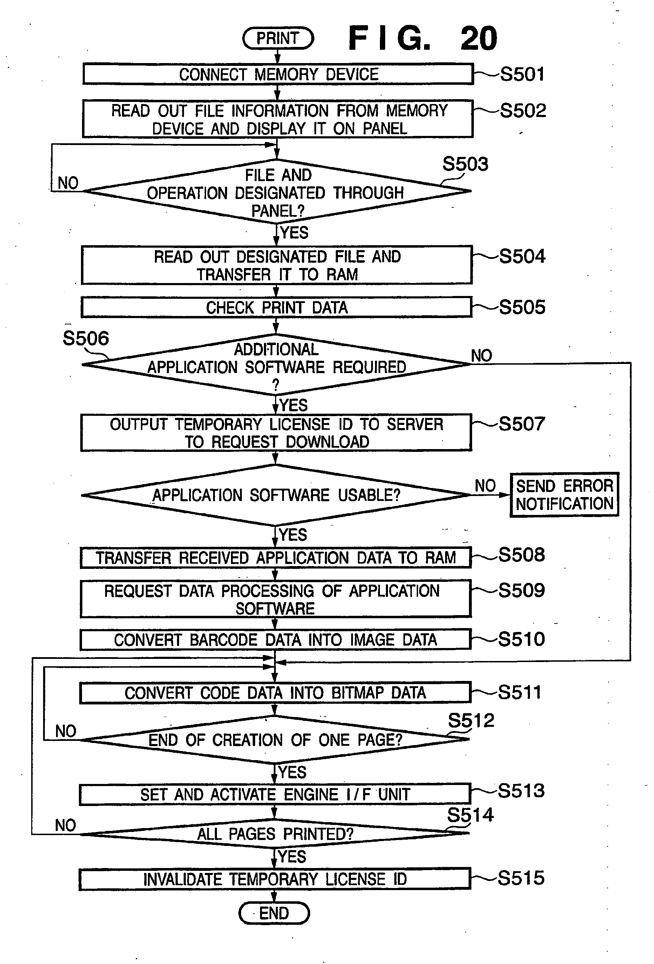

Next, the user connects the memory device 102 storing the print data to the MFP 120. Fig. 20 is a flowchart showing the print operation of the MFP 120 according to this comparative example.

When the memory device 102 is connected to the MFP 120, i.e., the USB interface unit 218, the CPU 211 detects connection of the device to the USB interface unit 218 (S501), reads out file information from the memory device 102, and displays the readout information on the panel unit 221 through the panel interface unit 217 (S502). When the user designates the data to be printed and designates print processing (S503), the CPU 211 recognizes the input from the panel unit 221 through the panel interface unit 217, reads out the designated file data from the USB interface unit 218, and transfers the file data to the RAM 213 (S504).

The CPU 211 checks the print data (S505) to know, from the header information, application software necessary for printing and checks whether the application software of barcode processing is stored in the device (S506). If the application software is not stored in the device, the temporary license ID information stored in the header is transmitted to the server 130 to request download of the application software (S507). The server 130 sends the temporary license ID information to the license server 140 to confirm whether download is possible. If it is confirmed that the temporary license ID information is correct, a reply is sent to the server 130 to notify it that download is possible. The server 130 sends the data of application software to the MFP 120. Upon receiving the application program through the network interface unit 214, the CPU 211 transfers the software to the RAM 213 (S508).

The CPU 211 requests the downloaded application software to process the stored print data (S509). The CPU 211 executes the application software of barcode processing to convert the barcode data detected in the print data into graphics data (S510). When all data are processed, the processing returns to the normal processing program. Next, the CPU 211 converts the code data of the print data into bitmap data (S511) and stores it on the RAM 213. When bitmap data creation from print data of one page is ended (S512), the CPU 211 sets and activates the engine interface unit 216 (S513).

The engine interface unit 216 reads out the bitmap data stored on the RAM 213 in synchronism with the printing unit 220 and transfers the readout data to the printing unit 220. The printing unit 220 executes printing on the basis of the transferred data. When next page data is present, the CPU 211 converts the code data of the print data into bitmap data and sets and activates the engine interface unit 216. The engine interface unit 216 reads out the bitmap data stored on the RAM 213 in synchronism with the printing unit 220 and transfers the readout data to the printing unit 220. The printing unit 220 executes printing on paper on the basis of the transferred data.

When all data are printed (S514), the CPU 211 rewrites the temporary license ID information in the print data in the memory device 102 connected to the USB interface unit 218 to invalid data (S515).

In this comparative example, barcode data processing has been exemplified as an operation example of application software. However, in, e.g., a color printing apparatus, color processing for each device or decryption of encrypted data can also be considered.

As described above, according to this comparative example, when a print job created by using a first image forming apparatus is to be executed by a second image forming apparatus, the print job can be executed even in the second image forming apparatus in the same environment by the same processing as in the first image forming apparatus.

### Third comparative example

In the third comparative example, an operation considering an environment wherein no application software can be downloaded will be described. The system configuration and device configuration are the same as in the second comparative example. The same reference numerals as in the second comparative example denote the same parts in the third comparative example, and a description thereof will be omitted.

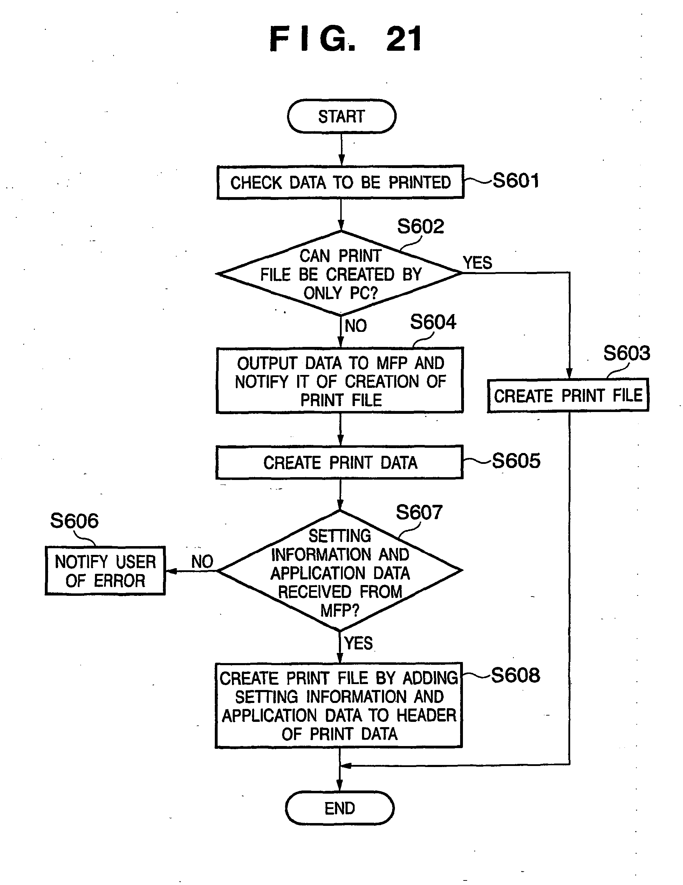

Fig. 21 is a flowchart of the operation of a PC 101 according to this comparative example. Data to be printed is designated from the PC 101, and creation of a print file is executed. To process data containing a barcode, the printer driver on the PC 101 checks the data (S601) and determines whether print data of the data can be created by only the PC (S602). If processing is possible in the PC, the PC 101 creates a print file (S603). If processing is impossible in the PC, the data is transmitted to a designated MFP 110, and the MFP 110 is notified that a print file should be created (S604). The PC 101 creates a file from the data transmitted to the MFP 110 (S605).

With the same processing as in Fig. 19, the MFP 110 requests a software application software takeout permission of a server 130.

Upon receiving a software application software takeout permission, the MFP 110 adds device information necessary for printing and the application software to be used to the data transmitted to the PC 101 and transmits the data. In this case, the temporary license information of the application software of barcode processing and the application software are transmitted as setting information (S607). The PC 101 creates a file from the print data output to the MFP 110 by adding the setting information and application software received from the MFP 110 to the header of the print data (S608). The user copies the created print data to a memory device 102.

If use or takeout of the application software is not permitted in a license server 140, the server 130 notifies the MFP 110 of it. In this case, the PC 101 presents an error notification to the user (S606).

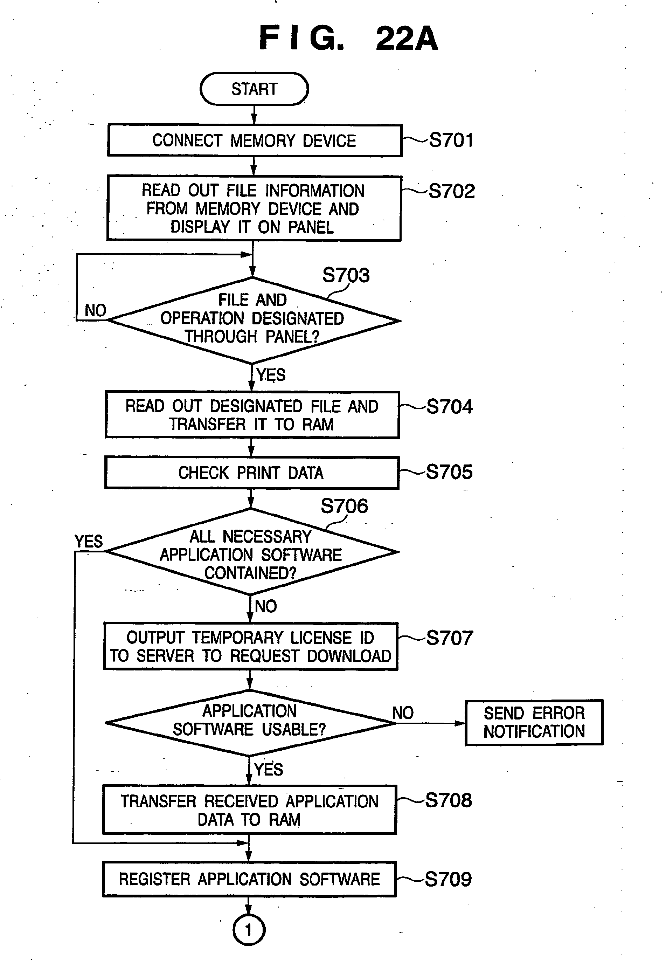

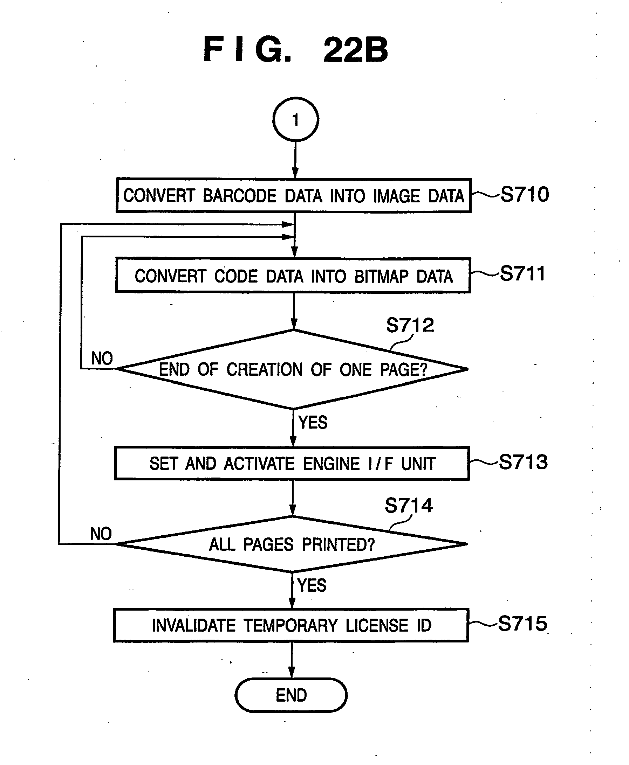

Next, the user connects the memory device 102 storing the above-described print data to the MFP 120. Figs. 22A and 22B are flowcharts showing the print operation of an MFP 120 according to this comparative example.

When the memory device 102 is connected to a USB interface unit 218, a CPU 211 detects connection of the device to the USB interface unit 218 (S701), reads out file information from the memory device 102, and displays the readout information on a panel unit 221 through a panel interface unit 217 (S702). When the user designates the data to be printed and designates print processing (S703), the CPU 211 recognizes the input from the panel unit 221 through the panel interface unit 217, reads out the designated file data from the USB interface unit 218, and transfers the file data to a RAM 213 (S704).

The CPU 211 checks the print data (S705) to determine whether print processing can be executed by the application software added to the header (S706). If print processing is possible, the application software is registered (S709) If it is determined that additional application software must be downloaded (S706), the temporary license ID information stored in the header is transmitted to the server 130 to request download of the application software (S707).

The server 130 sends the temporary license ID information to the license server 140 to confirm whether download is possible. If it is confirmed that the temporary license ID information is correct, a reply is sent to the server 130 to notify it that download is possible. The server 130 sends the data of application software to the MFP 120. Upon receiving the application program through a network interface unit 214, the CPU 211 transfers the software to a RAM 213 (S708). The application software is registered (S709) .

Referring to Fig. 22B, the CPU 211 executes the registered application software of barcode processing to convert the barcode data detected in the print data into graphics data (S710). When all data are processed, the processing returns to the normal processing program. Next, the CPU 211 converts the code data of the print data into bitmap data (S711) and stores it on the RAM 213. When bitmap data creation from print data of one page is ended (S712), the CPU 211 sets and activates an engine interface unit 216 (S713).

The engine interface unit 216 reads out the bitmap data stored on the RAM 213 in synchronism with a printing unit 220 and transfers the readout data to the printing unit 220. The printing unit 220 executes printing on paper on the basis of the transferred data. When next page data is present, the CPU 211 converts the code data of the print data into bitmap data and sets and activates the engine interface unit 216. The engine interface unit 216 reads out the bitmap data stored on the RAM 213 in synchronism with the printing unit 220 and transfers the readout data to the printing unit 220. The printing unit 220 executes printing on paper on the basis of the transferred data.

When all data are printed (S714), the CPU 211 rewrites the temporary license ID information in the print data in the memory device 102 connected to the USB interface unit 218 to invalid data (S715).

According to this comparative example, when a print job created by using a first image forming apparatus is to be executed by a second image forming apparatus, the print job can be executed even in the same environment by the same processing as in the first image forming apparatus even when the second image forming apparatus is not connected to the network or server.

### Fourth comparative example

A case will be described as the fourth comparative example of the present invention in which application software license management is executed by different servers. The same reference numerals as in the above-described second comparative example denote the same parts or process steps in the fourth comparative example, and a description thereof will be omitted.

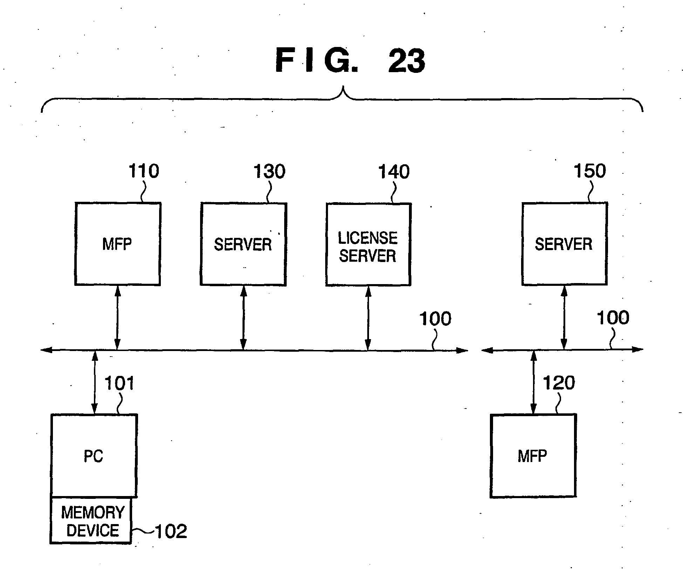

Fig. 23 is a view showing the configuration of a system according to this comparative example. Referring to Fig. 23, reference numeral 100 denotes a network; 101, a personal computer (PC); 102, a memory device used in connection to the PC; and 110 and 120, MFPs serving as printing apparatuses. A server 130 manages application software used by the MFPs 110 and 120 and allows download of software as needed. A license server 140 manages the licenses of the application software used by the MFPs 110 and 120. A server 150 manages application software used by the MFP 120 and allows download of software as needed.

Data to be printed is designated from the PC 101, and creation of a print file is executed. To process data containing a barcode, the printer driver on the PC 101 checks the data (S301) and determines whether print data of the data can be created by only the PC (S302). If processing is possible in the PC, the PC 101 creates a print file (S303). If processing is impossible in the PC, the data is transmitted to the designated MFP 110, and the MFP 110 is notified that a print file should be created (S304). The PC 101 creates a file from the data transmitted to the MFP 110 (S305).

The MFP 110 receives the data through a network interface unit 214 (S401) and notifies a CPU 211 of data reception. The CPU 211 transfers the received data to a RAM 213 through the network interface unit 214 (S402). When all data are transferred to the RAM 213 through the network interface unit 214 (S403), the CPU 211 checks the received data (S404) and checks whether application software processing is necessary (S405). If barcode data is present, the CPU 211 determines that application software processing is necessary and searches for the license ID of application software (S406).

If the license ID of the application software for the barcode data is present (S407), the CPU 211 reads out the license ID from an EEPROM 215, transmits the license ID to the server 130, and requests creation of temporary license information of the application software (S408). The server 130 sends the license ID to the license server 140 and requests creation of temporary license information. If the license server 140 permits creation, the server 130 creates temporary license ID information and transmits it to the MFP 110 (S410). If the license server 140 does not permit creation, the server 130 notifies the MFP 110 that no temporary license ID information can be created (S409).

Upon receiving the temporary license ID information, the MFP 110 transmits, to the PC 101, device information necessary for printing the transmitted data by a printing apparatus and, in this case, the temporary license information of the application software of barcode processing as setting information. Upon receiving the setting information (S307), the PC 101 creates a file from the data output to the MFP 110 by adding the setting information received from the MFP 110 to the header of the print data (S308). The user copies the created print data to the memory device 102. If the PC 101 receives no setting information, an error notification is sent to the user (S306).

Next, the user connects the memory device 102 storing the above-described print data to the MFP 120. When the memory device 102 is connected to the MFP 120, i.e., a USB interface unit 218, the CPU 211 detects connection of the device to the USB interface unit 218 (S501), reads out file information from the memory device 102, and displays the readout information on a panel unit 221 through a panel interface unit 217 (S502). When the user designates the data to be printed and designates print processing (S503), the CPU 211 recognizes the input from the panel unit 221 through the panel interface unit 217, reads out the designated file data from the USB interface unit 218, and transfers the file data to the RAM 213 (S504).

The CPU 211 checks the print data (S505) to know, from the header information, application software necessary for printing and checks whether the application software of barcode processing is stored in the device (S506). If the application software is not stored in the device, the temporary license ID information stored in the header is transmitted to the server 150 to request download of the application software (S507). The server 150 confirms the transmitted temporary license ID information. If it is confirmed that the license is correct, the server 150 sends the data of application software to the MFP 120. If it cannot be determined that the license is correct, an error notification is sent. Upon receiving the application program through the network interface unit 214, the CPU 211 transfers the software to the RAM 213 (S508).

The CPU 211 requests the downloaded application software to process the stored print data (S509). The CPU 211 executes the application software of barcode processing to convert the barcode data detected in the print data into graphics data (S510). When all data are processed, the processing returns to the normal processing program. Next, the CPU 211 converts the code data of the print data into bitmap data (S511) and stores it on the RAM 213. When bitmap data creation from print data of one page is ended (S512), the CPU 211 sets and activates an engine interface unit 216 (S513).

The engine interface unit 216 reads out the bitmap data stored on the RAM 213 in synchronism with a printing unit 220 and transfers the readout data to the printing unit 220. The printing unit 220 executes printing on paper on the basis of the transferred data. When next page data is present, the CPU 211 converts the code data of the print data into bitmap data and sets and activates the engine interface unit 216. The engine interface unit 216 reads out the bitmap data stored on the RAM 213 in synchronism with the printing unit 220 and transfers the readout data to the printing unit 220. The printing unit 220 executes printing on paper on the basis of the transferred data.

When all data are printed (S514), the CPU 211 rewrites the temporary license ID information in the print data in the memory device 102 connected to the USB interface unit 218 to invalid data (S515).

According to this comparative example, when a print job created by using a first image forming apparatus is to be executed by a second image forming apparatus, the print job can be executed in the same environment by the same processing as in the first image forming apparatus even when the second image forming apparatus does not belong to the same network as the first image forming apparatus.

### (Other comparative example)

The embodiment and comparative examples of the present invention have been described above in detail. The present invention may be applied to a system including a plurality of devices or an apparatus including a single device.

The present invention is also achieved even by supplying a program which implements the functions of the above-described embodiment and comparative examples to the system or apparatus directly or from a remote site and causing the system or apparatus to read out and execute the supplied program codes. Hence, the program code itself, which is installed in a computer to implement the functional processing of the present invention by the computer, is also incorporated in the technical scope of the present invention.

In this case, the program can take any form such as an object code,'a program to be executed by an interpreter, or script data to be supplied to the OS as long as the functions of the program can be obtained.

As a recording medium to supply the program, for example, a floppy^{®} disk, hard disk, optical disk, magnetooptical disk, MO, CD-ROM, CD-R, CD-RW, magnetic tape, nonvolatile memory card, ROM, or DVD (DVD-ROM or DVD-R) can be used.

As another program supply method, a client computer may be connected to a homepage on the Internet by using a browser in the client computer, and the computer program itself of the present invention or a compressed file containing an automatic install function may be downloaded from the homepage to a recording medium such as a hard disk. The program code contained in the program of the present invention may be divided into a plurality of files, and the files may be downloaded from different homepages. That is, a WWW server which causes a plurality of users to download a program file that causes a computer to implement the functional processing of the present invention is also incorporated in the claim of the present invention.

The program of the present invention may be encrypted, stored in a storage medium such as a CD-ROM, and distributed to users. Any user who satisfies predetermined conditions may be allowed to download key information for decryption from a homepage through the Internet, execute the encrypted program by using the key information, and install the program in the computer.

The functions of the above-described embodiment are implemented not only when the readout program is executed by the computer but also when, e.g., the OS running on the computer performs part or all of actual processing on the basis of the instructions of the program.

The functions of the above-described embodiment are also implemented when the program read out from the recording medium is written in the memory of a function expansion board inserted into the computer or a function expansion unit connected to the computer, and the CPU of the function expansion board or function expansion unit performs part or all of actual processing on the basis of the instructions of the program.

As many apparently widely different embodiment of the present invention can be made without departing from the scope thereof, it is to be understood that the invention is not limited to the specific embodiment thereof except as defined in the appended claims.

This invention provides a system to solve a problem that in outputting print data from another device by using a storage medium storing a print job, the obtained result changes depending on the difference in environment. In this system, device configuration information necessary for processing an image is stored in the storage medium simultaneously with storage of the print job. The device configuration information contains a software application and license to process an image. That is, in storing a job in the storage medium, the temporary license of a software application necessary for the job is stored together. When another copying machine reads out the job from the storage medium to execute it, a formal license is acquired from a server by using the temporary license. The job is properly executed by using the application on the basis of the formal license.

## Claims

1. An image forming system including a first image forming apparatus (1001) and a second image forming apparatus (1002), **characterized in that** said first image forming apparatus (1001) comprises a software application usable on condition of a first license which contains a use limit value (6003, 6004) to define a use limit of the application,
generation means for generating a print job to be implemented by using the application,
setting means for setting a part of the use limit value (6003, 6004) contained in the first license to be transferred to a second license (13000) which permits use of the application only in execution of the print job generated by the generation means,
storage means for storing, in a detachable data saving medium, the print job generated by the generation means and a temporary license (8000) for acquiring the second license (13000); and
wherein the temporary license (8000) contains information indicating the part of the use limit value (8004, 8005) set by the setting means; and
said second image forming apparatus (1002) comprises
means for reading out the temporary license (8000) from the detachable data saving medium,
means for requesting the second license (13000) necessary for using the application of a server (1004) by using the temporary license (8000),
means for acquiring the second license (13000) from the server (1004) in response to the request by using the temporary license (8000), and
means for executing the print job stored in the detachable data saving medium by using the application according to the part of the use limit value (13003, 13004) of the acquired second license (13000).

2. The system according to claim 1, **characterized in that** said storage means further stores setting information for use of the application in the detachable data saving medium together with the print job.

3. The system according to claim 1, **characterized in that** said storage means further stores the application itself in the detachable data saving medium together with the print job.

4. The system according to claim 1, **characterized in that** the second license (13000) permits only use of the application in said second image forming apparatus (1002).

5. The system according to claim 1, **characterized in that** said second image forming apparatus (1002) further comprises means for installing the application by using the second license (13000).

6. The system according to claim 5, **characterized in that** when the detachable data saving medium is removed from said second image forming apparatus (1002), the installed application is uninstalled.

7. The system according to claim 1, **characterized in that** said first image forming apparatus (1001) further comprises means for encrypting the temporary license (8000) by using a predetermined key.

8. The system according to claim 1, **characterized in that** said second image forming apparatus (1002) further comprises:
determination means for, when the temporary license (8000) is read out, determining whether a software application corresponding to the temporary license (8000) is present in said second image forming apparatus (1002); and
means for, when the software application corresponding to the temporary license (8000) is not present, transmitting an application request command and the temporary license (8000) to the server (1004), acquiring the application and the second license (13000) from the server (1004), and installing the application.

9. An image forming method of executing image forming by using a software application which requires a first license for use, which contains a use limit value (6003, 6004) to define a use limit of the application, **characterized by** comprising the steps of:
setting, by a first image forming apparatus (1001), a part of the use limit value (6003, 6004) contained in the first license to be transferred to a second license (13000) which permits use of the application only in execution of a print job generated by the first image forming apparatus (1001),
issuing (S5004) a temporary license (8000), which contains information indicating the set part of the use limit value (8004, 8005), for the print job which requires the application, in the first image forming apparatus (1001);
storing (S5007), by the first image forming apparatus (1001), the print job and the temporary license (8000) for acquiring the second license (13000) necessary for using the application in a detachable data saving medium of the first image forming apparatus (1001);
reading out (S10005) the print job and the temporary license (8000), by a second image forming apparatus (1002), from the detachable data saving medium and causing the second image forming apparatus (1002) to acquire (S10007) the second license (13000) from a server (1004) in exchange for the temporary license (8000); and
executing the print job in the second image forming apparatus (1002) by using the application according to the part of the use limit value (13003, 13004) of the acquired second license (13000).

## Patentansprüche

1. Bildformungssystem, das eine erste Bildformungsvorrichtung (1001) und eine zweite Bildformungsvorrichtung (1002) umfasst, **dadurch gekennzeichnet, dass**
die erste Bildformungsvorrichtung (1001) aufweist
eine Softwareanwendung, die unter der Voraussetzung einer ersten Lizenz verwendbar ist, welche einen Verwendungsbeschränkungswert (6003, 6004) enthält, um eine Verwendungsbeschränkung der Anwendung zu definieren,
eine Erzeugungseinrichtung zur Erzeugung eines durch Verwendung der Anwendung zu implementierenden Druckauftrags,
eine Einstellungseinrichtung zur Einstellung eines Teiles des in der ersten Lizenz enthaltenen Verwendungsbeschränkungswert (6003, 6004) um auf eine zweite Lizenz (13000) übertragen zu werden, welche die Verwendung der Anwendung lediglich für das Ausführen des durch die Erzeugungseinrichtung erzeugten Druckauftrags erlaubt,
eine Speichereinrichtung zur Speicherung des durch die Erzeugungseinrichtung erzeugten Druckauftrags und einer temporären Lizenz (8000) zur Erlangung der zweiten Lizenz (13000) in einem herausnehmbaren Datenspeicherungsmedium; und
wobei die temporäre Lizenz (8000) Informationen enthält, die den durch die Einstellungseinrichtung eingestellten Teil des Verwendungsbeschränkungswertes (8004, 8005) anzeigen; und
die zweite Bildformungsvorrichtung (1002) aufweist
eine Einrichtung zum Auslesen der temporären Lizenz (8000) aus dem herausnehmbaren Datenspeicherungsmedium,
eine Einrichtung zum Anfordern der zur Verwendung der Anwendung notwendigen zweiten Lizenz (13000) von einem Server (1004) durch Verwendung der temporären Lizenz (8000),
eine Einrichtung zum Erlangen der zweiten Lizenz (13000) von dem Server (1004) im Ansprechen auf die Anforderung durch Verwendung der temporären Lizenz (8000), und
eine Einrichtung zur Ausführung des in dem herausnehmbaren Datenspeicherungsmedium gespeicherten Druckauftrags durch Verwendung der Anwendung gemäß dem Teil des Verwendungsbeschränkungswertes (13003, 13004) der erlangten zweiten Lizenz (13000).

2. System gemäß Anspruch 1, **dadurch gekennzeichnet, dass** die Speichereinrichtung weiterhin Einstellungsinformationen zur Verwendung der Anwendung in dem herausnehmbaren Datenspeicherungsmedium zusammen mit dem Druckauftrag speichert.

3. System gemäß Anspruch 1, **dadurch gekennzeichnet, dass** die Speichereinrichtung weiterhin die Anwendung selbst in dem herausnehmbaren Datenspeicherungsmedium zusammen mit dem Druckauftrag speichert.

4. System gemäß Anspruch 1, **dadurch gekennzeichnet, dass** die zweite Lizenz (13000) lediglich die Verwendung der Anwendung in der zweiten Bildformungsvorrichtung (1002) erlaubt.

5. System gemäß Anspruch 1, **dadurch gekennzeichnet, dass** die zweite Bildformungsvorrichtung (1002) weiterhin eine Einrichtung zur Installation der Anwendung durch Verwendung der zweiten Lizenz (13000) aufweist.

6. System gemäß Anspruch 5, **dadurch gekennzeichnet, dass** wenn das herausnehmbare Datenspeicherungsmedium aus der zweiten Bildformungsvorrichtung (1002) entfernt wird, die installierte Anwendung deinstalliert wird.

7. System gemäß Anspruch 1, **dadurch gekennzeichnet, dass** die erste Bildformungsvorrichtung (1001) weiterhin eine Einrichtung zum Verschlüsseln der temporären Lizenz (8000) durch Verwendung eines vorbestimmten Schlüssels aufweist.

8. System gemäß Anspruch 1, **dadurch gekennzeichnet, dass** die zweite Bildformungsvorrichtung (1002) weiterhin aufweist:
eine Bestimmungseinrichtung zur Bestimmung, wenn die temporäre Lizenz (8000) ausgelesen ist, ob eine der temporären Lizenz (8000) entsprechende Softwareanwendung in der zweiten Bildformungsvorrichtung (1002) vorhanden ist; und
eine Einrichtung zur Übertragung einer Anweisung zur Anforderung der Anwendung und zur Übertragung der temporären Lizenz (8000) an den Server (1004), wenn die der temporären Lizenz (8000) entsprechende Softwareanwendung nicht vorhanden ist, zur Erlangung der Anwendung und der zweiten Lizenz (13000) von dem Server (1004), und zur Installation der Anwendung.

9. Bildformungsverfahren des Ausführens von Bildformung durch Verwenden einer Softwareanwendung, welche eine erste Lizenz zur Verwendung erfordert, welche einen Verwendungsbeschränkungswert (6003, 6004) enthält, um eine Verwendungsbeschränkung der Anwendung zu definieren,
**dadurch gekennzeichnet, dass** es die folgenden Schritte aufweist:
Einstellen, durch eine erste Bildformungsvorrichtung (1001), eines Teiles des in der ersten Lizenz enthaltenen Verwendungsbeschränkungswert (6003, 6004) um auf eine zweite Lizenz (13000) übertragen zu werden, welche das Verwenden der Anwendung lediglich beim Ausführen eines durch die erste Bildformungsvorrichtung (1001) erzeugten Druckauftrags erlaubt,
Ausgeben (S5004) einer temporären Lizenz (8000), welche Informationen enthält, die den eingestellten Teil des Verwendungsbeschränkungswertes (8004, 8005) anzeigen, für den die Anwendung erfordernden Druckauftrag, in der ersten Bildformungsvorrichtung (1001);
Speichern (S5007), durch die erste Bildformungsvorrichtung (1001), des Druckauftrags und der temporären Lizenz (8000) zum Erlangen der zum Verwenden der Anwendung notwendigen zweiten Lizenz (13000), in einem herausnehmbaren Datenspeicherungsmedium der ersten Bildformungsvorrichtung (1001);
Auslesen (S10005) des Druckauftrags und der temporären Lizenz (8000) durch eine zweite Bildformungsvorrichtung (1002) aus dem herausnehmbaren Datenspeicherungsmedium und Veranlassen der zweiten Bildformungsvorrichtung (1002) im Austausch für die temporäre Lizenz (8000) die zweite Lizenz (13000) von einem Server (1004) zu erlangen (S10007); und
Ausführen des Druckauftrags in der zweiten Bildformungsvorrichtung (1002) durch Verwenden der Anwendung gemäß dem Teil des Verwendungsbeschränkungswertes (13003, 13004) der erlangten zweiten Lizenz (13000).

## Revendications

1. Système de formation d'image incluant un premier appareil (1001) de formation d'image et un second appareil (1002) de formation d'image,
**caractérisé en ce que** ledit premier appareil (1001) de formation d'image comprend :
une application logicielle utilisable sous condition d'une première licence qui contient une valeur limite d'utilisation (6003, 6004) pour définir une limite d'utilisation de l'application ;
un moyen générateur destiné à engendrer une tâche d'impression à réaliser en utilisant l'application ;
un moyen de paramétrage destiné à paramétrer une partie de la valeur limite d'utilisation (6003, 6004) contenue dans la première licence à transférer à une seconde licence (13000) qui permet l'utilisation de l'application seulement dans l'exécution de la tâche d'impression engendrée par le moyen générateur ;
un moyen de mémorisation destiné à mémoriser, sur un support démontable de sauvegarde de données, la tâche d'impression engendrée par le moyen générateur et une licence temporaire (8000) destinée à acquérir la seconde licence (13000), et
dans lequel la licence temporaire (8000) contient une information indiquant la partie de la valeur limite d'utilisation (8004, 8005) paramétrée par le moyen de paramétrage, et
**en ce que** ledit second appareil (1002) de formation d'image comprend :
un moyen destiné à lire la licence temporaire (8000) à partir du support démontable de sauvegarde de données ;
un moyen destiné à demander la seconde licence (13000) nécessaire pour utiliser l'application d'un serveur (1004) en utilisant la licence temporaire (8000) ;
un moyen destiné à acquérir, du serveur (1004), la seconde licence (13000) en réponse à la demande en utilisant la licence temporaire (8000) ; et
un moyen destiné à exécuter la tâche d'impression mémorisée sur le support démontable de sauvegarde de données en utilisant l'application en fonction de la partie de la valeur limite d'utilisation (13003, 13004) de la seconde licence (13000) acquise.

2. Système selon la revendication 1, **caractérisé en ce que** ledit moyen de mémorisation mémorise en outre, sur le support démontable de sauvegarde de données conjointement avec la tâche d'impression, de l'information de paramétrage pour utilisation de l'application.

3. Système selon la revendication 1, **caractérisé en ce que** ledit moyen de mémorisation mémorise en outre, sur le support démontable de sauvegarde de données conjointement avec la tâche d'impression, l'application elle-même.

4. Système selon la revendication 1, **caractérisé en ce que** la seconde licence (13000) permet seulement l'utilisation de l'application dans ledit second appareil (1002) de formation d'image.

5. Système selon la revendication 1, **caractérisé en ce que** ledit second appareil (1002) de formation d'image comprend en outre un moyen destiné à installer l'application en utilisant la seconde licence (13000).

6. Système selon la revendication 5, **caractérisé en ce que**, lorsque le support démontable de sauvegarde de données est retiré dudit second appareil (1002) de formation d'image, l'application installée est désinstallée.

7. Système selon la revendication 1, **caractérisé en ce que** ledit premier appareil (1001) de formation d'image comprend en outre un moyen destiné à crypter la licence temporaire (8000) en utilisant une clé prédéterminée.

8. Système selon la revendication 1, **caractérisé en ce que** ledit second appareil (1002) de formation d'image comprend en outre :
un moyen de détermination destiné, lorsque la licence temporaire (8000) est lue, à déterminer si une application logicielle correspondant à la licence temporaire (8000) est présente dans ledit second appareil (1002) de formation d'image ; et
un moyen destiné, lorsque l'application logicielle correspondant à la licence temporaire (8000) n'est pas présente, à transmettre au serveur (1004) une instruction de demande d'application et la licence temporaire (8000), à acquérir du serveur (1004) l'application et la seconde licence (13000), et à installer l'application.

9. Procédé de formation d'image consistant à exécuter une formation d'image en utilisant une application logicielle qui pour utilisation exige une première licence, qui contient une valeur limite d'utilisation (6003, 6004) pour définir une limite d'utilisation de l'application,
**caractérisé en ce qu'**il comprend les étapes consistant :
à paramétrer, par un premier appareil (1001) de formation d'image, une partie de la valeur limite d'utilisation (6003, 6004) contenue dans la première licence à transférer à une seconde licence (13000) qui permet l'utilisation de l'application seulement dans l'exécution d'une tâche d'impression engendrée par le premier appareil (1001) de formation d'image ;
à émettre (S5004) une licence temporaire (8000), qui contient de l'information indiquant la partie paramétrée de la valeur limite d'utilisation (8004, 8005), pour la tâche d'impression qui exige l'application, dans le premier appareil (1001) de formation d'image ;
à mémoriser (S5007), par le premier appareil (1001) de formation d'image, sur un support démontable de sauvegarde de données du premier appareil (1001) de formation d'image, la tâche d'impression et la licence temporaire (8000) destinée à acquérir la seconde licence (13000) nécessaire pour utiliser l'application ;
à lire (S10005) la tâche d'impression et la licence temporaire (8000), par un second appareil (1002) de formation d'image, à partir du support démontable de sauvegarde de données et à faire que le second appareil (1002) de formation d'image acquière (S10007) d'un serveur (1004) la seconde licence (13000) en échange de la licence temporaire (8000) ; et
à exécuter la tâche d'impression dans le second appareil (1002) de formation d'image en utilisant l'application en fonction de la partie de la valeur limite d'utilisation (13003, 13004) de la seconde licence (13000) acquise.
